Europäisches Patentamt

European Patent Office

Office européen des brevets

(19)

(11) Veröffentlichungsnummer: **0 193 960 B1**

(12) **EUROPÄISCHE PATENTSCHRIFT**

(45) Veröffentlichungstag der Patentschrift: **15.07.92**

(51) Int. Cl.5: **C08G 14/10**, C09J 161/34, //C08L61/34

(21) Anmeldenummer: **86102998.1**

(22) Anmeldetag: **06.03.86**

(54) **Kältestabile Leimharzlösung.**

(30) Priorität: **08.03.85 DE 3508205**

(43) Veröffentlichungstag der Anmeldung:
**10.09.86 Patentblatt 86/37**

(45) Bekanntmachung des Hinweises auf die
Patenterteilung:
**15.07.92 Patentblatt 92/29**

(84) Benannte Vertragsstaaten:
**AT CH DE FR LI NL SE**

(56) Entgegenhaltungen:
**AT-B- 328 743**
**DE-A- 1 595 368**

(73) Patentinhaber: **BASF Aktiengesellschaft
Carl-Bosch-Strasse 38
W-6700 Ludwigshafen(DE)**

(72) Erfinder: **Schatz, Hermann
Neubergstrasse 50
W-6730 Neustadt(DE)**
Erfinder: **Matthias, Guenther, Dr.
Meergartenweg 25 a
W-6710 Frankenthal(DE)**
Erfinder: **Winter, Juergen
Hubestrasse 31
W-6940 Weinheim(DE)**

EP 0 193 960 B1

**Beschreibung**

Die Erfindung betrifft eine kältestabile, wäßrige Leimharzlösung von Kondensationsprodukten des formaldehyds mit einer Kombination von Phenol-, Harnstoff- und Melamin-Komponenten, ein Verfahren zu ihrer Herstellung, sowie die Verwendung von ε-Aminocaprolactam oder ε-Aminocapronsäure als Kältestabilisator für diese Leimharzlösung.

Es ist bekannt, daß Phenol-Harnstoff-Melamin-formaldehyd-Leimharze die Erscheinung der Kälteinstabilität aufweisen. Dies gibt sich dadurch zu erkennen, daß die Viskosität der Leimharzlösung beim Absenken der Temperatur unter etwa 12°C bei längerer Lagerzeit, beispielsweise von einer Woche, sehr stark ansteigt und bis zu einer pastösen oder gelatinösen Beschaffenheit führt. Die Ursache ist nicht etwa die Temperaturabhängigkeit der Viskosität. Dieses Phänomen wäre durch Temperaturerhöhung sofort umkehrbar. Die Viskositätsänderung ist derart, daß bei längerer Lagerzeit und tiefer Temperatur eine Änderung der Makrostruktur derart stattfindet, daß das System hochviskos und auch thixotrop wird. Die Viskositätszunahme kann bis zur pastösen Beschaffenheit führen. Diesen Zustand kann man nur durch starke Erwärmung auf 60 bis 70°C über längere Zeit wieder zerstören. Dann aber ist die Lösung vorbelastet und geht wesentlich schneller wieder in den Pastenzustand über, wenn sie wieder abgekühlt wird. Dieses Phänomen ist nur durch eine Änderung der zwischenmolekularen Struktur der Flüssigkeit erklärbar.

Die Erscheinung der Kälteinstabilität ist unerwünscht. Sie behindert den Transport, die Lagerung und das Fördern durch Pumpen in der kalten Jahreszeit, kostet viel Energie für die Rückführung in den dünnflüssigen Zustand oder erfordert den Abbau des dick gewordenen Harzes per Hand aus dem Behälter, sei es Tankzug, Faß, Tank, Container oder Kesselwagen. Im pastenförmigen Zustand ist die Verarbeitung des Leimharzes nicht mehr möglich. Selbst wenn die Viskositätszunahme noch nicht zur pastenartigen Konsistenz geführt hat, ist die Verarbeitbarkeit bereits wesentlich schlechter.

Das Problem der Kälteinstabilität kann gelöst werden, indem man das Harz bei der Lagerung oder beim Transport auf einer Temperatur oberhalb 12°C hält. Das kann durch eine gute Verpackungsisolierung oder durch eine Beheizung, beispielsweise Lagerung der Fässer in beheizten Räumen, erfolgen. Bisweilen ist es möglich, das Harz so schnell zu verarbeiten, daß es die tiefe Temperatur noch nicht angenommen hat oder die Zeit für den durch die tiefe Temperatur bedingten Viskositätsanstieg noch nicht ausreicht.

Die Phenol-Harnstoff-Melamin-Formaldehyd-Leimharze finden Verwendung für die Herstellung von wetterfesten Spanplatten und für die wetterfeste Massivholzverleimung, d.h. die Verleimung von Brettern zu Brettschichtträgern bzw. Balken. Die Kältestabilität ist für den Transport des Harzes über lange Wegstrekken und die Lagerung an der Verarbeitungsstelle außerordentlich wichtig. Im Pastenzustand läßt sich das Harz nicht mehr pumpen. Bei Schiffsversand, der längere Zeit in Anspruch nimmt, oder Lagerung in Außentanklagern über längere Zeit ist das Dickwerden durch Kälte besonders problematisch, da sich große, im Tank befindliche Leimharzmengen nicht mehr mit technisch vertretbarem Aufwand aufheizen lassen.

Mit einem anderen technischen Problem befaßt sich die DE-C-15 95 368. Sie betrifft Aminoplast-Tränkharzlösungen zum Imprägnieren von Trägerstoffen aus Papier oder Geweben, welche durch Kondensation von Melamin mit Formaldehyd in wäßrigem Medium, gegebenenfalls mit anderen, zur Bildung von Aminoplasten befähigten Modifikationsmitteln, erhalten werden. Diese Tränkharzlösungen besitzen eine erhöhte Lagerstabilität. Die Erhöhung der Lagerstabilität wird dadurch erreicht, daß man die Kondensation in Gegenwart von 3 bis 15 Gew.% ε-Aminocaprolactam vornimmt.

Bei der Verlängerung der Lagerstabilität gemäß DE-C-15 95 368 handelt es sich um ein Phänomen, das von Bedeutung bei Leim- bzw. Tränkharzen ist und mit dem Phänomen der Kältestabilität nichts zu tun hat.

Die Lagerstabilität von Formaldehyd-Kondensationsprodukten ist stets begrenzt, weil diese oligomeren Produkte im Laufe der Zeit weiterkondensieren. Das erfolgt rasch bei hoher Temperatur und langsam bei tiefer Temperatur. Die Weiterkondensation macht sich in einer irreversiblen Zunahme der Viskosität bemerkbar. Die Viskosität selbst ist eine temperaturabhängige Eigenschaft, weshalb sie bei einer bestimmten Temperatur, meist 20°C. gemessen wird.

Harze, die mit einer Anfangsviskosität, wie es technisch üblich ist, je nach Typ von 200 bis 1.200 mPa.s gelagert werden, können im Laufe längerer Lagerzeit bei höherer Temperatur, beispielsweise ungefähr 30°C, Viskositäten entwickeln, die auf 5.000 mPa.s und noch höher ansteigen. Dann sind die Harze mit einfachen Pumpen nicht mehr pumpbar. Eine andere Eigenschaft ist die irreversible Bildung von wasserunlöslichen Polymeren, die als Trübung erscheinen und sich eventuell absetzen. Diese Erscheinung ist besonders bei Tränkharzen, die bekanntlich wasserklar bleiben sollen, unerwünscht.

Im Gegensatz hierzu ist die Kälteinstabilität eine Erscheinung, die unter dem Einfluß von tiefer Temperatur sich als Bildung thixotroper und pastenartiger Harze zu erkennen gibt. Diese Pasten lassen sich jedoch wieder verflüssigen, wenn das Harz einige Zeit auf 60°C oder mehr erwärmt wird. Der dünnere Zustand bleibt dann wieder längere Zeit, wenn auch nicht so lange wie bei einem unbelasteten Harz, erhalten. Diese veränderten Eigenschaften scheinen eine Folge einer Makrostrukturänderung zu sein, weshalb man bei bestimmten Erscheinungsformen der Thixotropie auch von Strukturviskosität zu sprechen pflegt.

Das Problem der Kälteinstabilität tritt bei den meisten Typen von Kondensationsprodukten, so auch bei den Kondensationsprodukten der DE-C-15 95 368, nicht auf. Bei den phenolhaltigen Phenol-Harnstoff-Melamin-Formaldehyd-Leimharzen ist sie jedoch eine für die technische Anwendung äußerst unangenehme Erscheinung.

Die FR-A-898 175 betrifft Aminoplaste, welche zur Erhöhung der Alkalilöslichkeit und Säurefällbarkeit in Gegenwart von Aminocarbonsäuren, beispielsweise ε-Aminocapronsäure oder ε-Aminocaprolactam, kondensiert wurden. Die Druckschrift betrifft nicht das Problem der Kältestabilität von Harzlösungen, da sich dieses Problem bei den phenolfreien Aminoplasten nicht stellt.

Der Erfindung liegt die Aufgabe zugrunde, eine kältestabile, wäßrige Leimharzlösung von Kondensationsprodukten des Formaldehyds mit einer Kombination von Phenol-, Harnstoff- und Melamin-Komponenten zur Verfügung zu stellen, bei der das eingangs diskutierte Problem der Kälteinstabilität nicht mehr auftritt.

Diese Aufgabe wird gelöst durch Bereitstellung einer kältestabilen, wäßrigen Leimharzlösung von Kondensationsprodukten des Formaldehyds mit einer Kombination von Phenol-, Harnstoff- und Melamin-Komponenten die erhältlich ist durch Kondensation der Phenol-, Harnstoff- und Melamin-Komponenten mit Formaldehyd in Gegenwart von mindestens 0,5 Gew.% ε-Aminocaprolactam oder ε-Aminocapronsäure, bezogen auf das Gesamtgewicht der Leimharzlösung, wobei Harnstoff- und Phenolkomponenten gegebenenfalls als Formaldehyd-Vorkondensate eingesetzt werden, in welchem Fall das Harnstoff-Formaldehyd-Vorkondensat auch dem in Gegenwart des ε-Aminocaprolactams oder der ε-Aminocapronsäure aus Phenol-Formaldehyd-Vorkondensat, Melamin und Formaldehyd gebildeten Kondensat zugemischt werden kann.

Nach einer bevorzugten Ausführungsform der Erfindung ist die Leimharzlösung erhältlich durch Kondensation in Gegenwart von 0,5 bis 2 Gew.%, vorzugsweise 0,8 bis 1,3 Gew.%, ε-Aminocaprolactam oder ε-Aminocapronsäure, bezogen auf das Gesamtgewicht der Leimharzlösung.

Die erfindungsgemäße Leimharzlösung kann Modifizierungsmittel für Phenoplaste enthalten. Als Beispiele für Modifizierungsmittel sind zu nennen Natriumsulfit, Natriumhydrogensulfit, Methanol, Ethylenglykol und andere, übliche Modifizierungsmittel, beispielsweise solche, die gegen Termiten- und Pilzbefall wirksam sind oder zur Verlängerung der Haltbarkeit des mit der Leimharzlösung behandelten Holzwerkstoffs dienen.

Die Erfindung betrifft auch ein Verfahren zur Herstellung der kältestabilen, wäßrigen Leimharzlösung von Kondensationsprodukten des Formaldehyds mit einer Kombination von Phenol-, Harnstoff- und Melamin-Komponenten, das dadurch gekennzeichnet ist, daß man die Phenol-, Harnstoff- und Melamin-Komponenten mit Formaldehyd in Gegenwart von ε-Aminocaprolactam oder ε-Aminocapronsäure in einer Menge von mindestens 0,5 Gew.%, vorzugsweise 0,5 bis 2 Gew.%, insbesondere 0,8 bis 1,3 Gew.%, bezogen auf das Gesamtgewicht der Leimharzlösung, kondensiert, wobei Harnstoff- und Phenolkomponenten gegebenenfalls als Formaldehyd-Vorkondensate eingesetzt werden, in welchem Fall das Harnstoff-Formaldehyd-Vorkondensat auch dem in Gegenwart des ε-Aminocaprolactams oder der ε-Aminocapronsäure aus Phenol-Formaldehyd-Vorkondensat, Melamin und Formaldehyd gebildeten Kondensat zugemischt werden kann.

Die Erfindung betrifft ferner die Verwendung von ε-Aminocaprolactam oder ε-Aminocapronsäure als Kältestabilisator für wäßrige Leimharzlösungen von Kondensationsprodukten des Formaldehyds mit einer Kombination von Phenol-, Harnstoff- und Melamin-Komponenten, in einer Menge von mindestens 0,5 Gew.%, vorzugsweise 0,5 bis 2 Gew.%, insbesondere 0,8 bis 1,3 Gew.%, bezogen auf das Gesamtgewicht der Leimharzlösung.

Es wurde überraschend festgestellt, daß durch den Zusatz von ε-Aminocaprolactam oder ε-Aminocapronsäure die Leimharzlösungen kältestabil sind und auch bei -3°C mindestens 4 Wochen stabil, d.h. fließfähig, bleiben, während unbehandelte Harze vielfach schon nach 1 Woche pastös werden. Bei Zusätzen von unter 0,5 Gew.% ε-Aminocaprolactam bzw. ε-Aminocapronsäure st der kältestabilisierende Effekt sehr gering. Verwendet man mehr als 2 Gew.% ε-Aminocaprolactam bzw. ε-Aminocapronsäure, so erzielt man keinen zusätzlichen Nutzen. Der Mehraufwand schadet jedoch nicht, führt aber zu einer unnötigen Verteuerung des Harzes.

Der Grund für die Wirksamkeit des ε-Aminocaprolactam bzw. der ε-Aminocapronsäure als Kältestabilisator in den vorliegenden Leimharzen ist noch nicht bekannt.

Da Lagerinstabilität und Kälteinstabilität auf völlig unterschiedlichen Phänomenen beruhen und auch bei unterschiedlichen Harzarten auftreten, konnte aus der Problemlösung der Lagerstabilität, die nach der DE-C-15 95 368 für phenolfreie Melaminharze geboten wird, keine Anregung zur Lösung des der Erfindung zugrundeliegenden technischen Problems der Kältestabilität abgeleitet werden. Interessanterweise sind zur Verbesserung der Lagerstabilität gemäß der DE-C-15 95 368 vergleichsweise hohe Konzentrationen an $\epsilon$-Aminocaprolactam erforderlich, nämlich 3 bis 15 Gew.%, bezogen auf das Gemisch aus Melamin und Formaldehyd, während die Verbesserung der Kältestabilität bei den vorliegenden Leimharzlösungen bereits bei einem Zusatz von nur 0,5 Gew.%, bezogen auf das Gesamtgewicht der Leimharzlösung, einsetzt.

Als Phenolkomponente kann man erfindungsgemäß bevorzugt unsubstituiertes Phenol oder substituierte Phenole einsetzen. Als substituierte Phenole kommen Kresole und Xylenole in Betracht. Diese sollten mindestens an zwei in ortho- oder para-Stellung zur OH-Gruppe befindlichen Kohlenstoffatomen unsubstituiert sein.

Als Phenol-Harnstoff-Melamin-Formaldehyd-Kondensationsprodukte können solche der üblichen Zusammensetzung gewählt werden, wie sie beispielsweise in der DE-C-29 51 957 und der EP-B-31 533 beschrieben sind. Zur Herstellung einer typischen erfindungsgemäßen Leimharzlösung geht man von 1 bis 10 Gew.% Phenol, 15 bis 25 Gew.% Harnstoff, 10 bis 20 Gew.% Melamin, 20 bis 45 Gew.% Formaldehyd, 0,1 bis 0,2 Gew.% Natriumhydroxid und 0,5 bis 2 Gew.% $\epsilon$-Aminocaprolactam oder $\epsilon$-Aminocapronsäure, aus. Die Differenz auf 100 Gew.% ist Wasser.

Zur Herstellung einer typischen erfindungsgemäßen Leimharzlösung werden ungefähr 5 Gew.% Phenol, 21 Gew.% Harnstoff, 13 Gew.% Melamin, 32 Gew.% Formaldehyd, 0,12 Gew.% Natriumhydroxid und 1 Gew.% $\epsilon$-Aminocaprolactam oder $\epsilon$-Aminocapronsäure eingesetzt. Der Rest ist Wasser.

Die erfindungsgemäßen Leimharzlösungen werden nach an sich bekannten Verfahren, so auch den in den obigen Patentschriften genannten Verfahren, unter Mitkondensation von $\epsilon$-Aminocaprolactam bzw. $\epsilon$-Aminocapronsäure ab Beginn des Kondendierens hergestellt. Man kann aber auch nach anderen in der Literatur beschriebenen Verfahren arbeiten.

Setzt man das $\epsilon$-Aminocaprolactam nach der Kondensation der Komponenten zu, erhält man praktisch keinen kältestabilisierenden Effekt.

Die Erfindung wird durch die nachfolgenden Beispiele weiter erläutert.

Beispiel 1

3.230 Teile wäßrige 40 %ige Formaldehydlösung, 4.887 Teile eines handelsüblichen, wäßrigen Harnstoff-Formaldehyd-Leimharzes, welches ein Molverhältnis von Formaldehyd zu Harnstoff von 1,8:1 und einen Feststoffgehalt von ca. 65 % aufweist, werden in einem Reaktionskessel vorgelegt und unter Rühren mit 1.300 Teilen Melamin, 466 Teilen Phenol, 99 Teilen $\epsilon$-Aminocaprolactam und 23 Teilen einer 50 %igen Natronlauge versetzt.

Das Gemisch wird auf 90°C erhitzt und bei 90 bis 95°C innerhalb 2 Stunden bis zu einer Viskosität von 700 mPa.s (20°C) kondensiert, wobei durch Zugabe von 4 Teilen einer 50 %igen Natronlauge ein konstanter pH-Wert von 8,9 eingehalten wird. Das so erhaltene Leimharz wird dann auf 20°C abgekühlt und hat folgende Eigenschaften:

| | |
|---|---|
| Viskosität: | 750 mPa.s (20°C) |
| pH-Wert bei 20°C: | 9,1 |
| Dichte bei 20°C: | 1,262 g/cm$^3$ |
| Trockengehalt: | 61 % |
| Gelierzeit bei 40°C: | 32 Minuten (nach Zusatz von 3 % Härter = 34 %ige Ameisensäure) |
| Lagerstabilität bei 25°C: | 6 Wochen (Viskositätsanstieg bis 2.500 mPa.s) |
| Kältestabilität bei 0°C: | mehr als 3 Monate |

Bei Verwendung einer entsprechenden Menge an $\epsilon$-Aminocapronsäure anstelle von $\epsilon$-Aminocaprolactam erhält man im wesentlichen dieselben Ergebnisse.

Vergleichsversuch 1

3.230 Teile wäßrige 40 %ige Formaldehydlösung und 4.887 Teile eines handelsüblichen, wäßrigen Harnstoff-Formaldehyd-Leimharzes, wie im Beispiel 1 beschrieben, werden in einem Reaktionsgefäß vorgelegt und unter Rühren mit 1.300 Teilen Melamin, 466 Teilen Phenol und 23 Teilen 50 %iger Natronlauge versetzt.

Das Gemisch wird auf 90°C erhitzt und bei dieser Temperatur innerhalb 2 Stunden bis zu einer Viskosität von 700 mPa.s (20°C) bei einem konstanten pH-Wert von 8,9 kondensiert.

Das so erhaltene Leimharz wird auf 20°C abgekühlt und weist folgende Eigenschaften auf:

| | |
|---|---|
| Viskosität: | 720 mPa.s (20°C) |
| pH-Wert bei 20°C: | 9,0 |
| Dichte bei 20°C: | 1,26 g/cm$^3$ |
| Trockengehalt: | 59 % |
| Gelierzeit bei 40°C: | 30 Minuten (nach Zusatz von 3 % Härter = 34 %ige Ameisensäure) |
| Lagerstabilität bei 25°C: | 5 Wochen (Viskositätsanstieg bis 2.500 mPa.s) |
| Kältestabilität bei 0°C: | nach 3 Wochen pastös |

Ein so pastös gewordenes Leimharz kann durch Temperaturnachbehandlung bei 60 bis 70°C wieder in den flüssigen Zustand zurückgeführt werden, allerdings wurde die Kältestabilität weiter verringert und beträgt dann nur noch ca. 3 Tage.

Beispiel 2

5.343 Teile wäßrige 40 %ige Formaldehydlösung werden mit 912 Teilen Phenol und 54 Teilen 50 %iger Natronlauge versetzt, unter Rühren auf 90°C erhitzt und bei dieser Temperatur 30 Minuten kondensiert. Die erhaltene Lösung wird auf 25°C abgekühlt, und unter Rühren werden 3.200 Teile Melamin und 174 Teile $\epsilon$-Aminocaprolactam zugesetzt. Das Reaktionsgemisch wird bis 90°C aufgeheizt und bei 90 bis 95°C ca. 70 Minuten bis zu einer Viskosität von 400 mPa.s (20°C) umgesetzt.

Die erhaltene Harzlösung wird auf 25°C abgekühlt und mit 7.940 Teilen eines handelsüblichen wäßrigen Harnstoff-Formaldehyd-Leimharzes, wie in Beispiel 1 beschrieben, abgemischt.

Die Leimharzmischung hat folgende Eigenschaften:

| | |
|---|---|
| Viskosität: | 606 mPa.s (20°C) |
| pH-Wert bei 20°C: | 9,1 |
| Dichte bei 20°C: | 1,276 g/cm$^3$ |
| Trockengehalt: | 62,8 % |
| Gelierzeit bei 50°C: | 32 Minuten (nach Zusatz von 10 % einer 15 %igen NH$_4$Cl-Lösung) |
| Lagerstabilität bei 25°C: | 6 Wochen (Viskositätsanstieg bis 2.500 mPa.s) |
| Kältestabilität bei 0°C: | 4 Wochen |

Bei Verwendung einer entsprechenden Menge an $\epsilon$-Aminocapronsäure anstelle von $\epsilon$-Aminocaprolactam erhält man im wesentlichen die selben Ergebnisse.

Vergleichsversuch 2

5.343 Teile wäßrige 40 %ige Formaldehydlösung werden mit 912 Teilen Phenol und 54 Teilen 50 %iger Natronlauge versetzt, unter Rühren auf 90°C aufgeheizt und bei dieser Temperatur 30 Minuten kondensiert. Die erhaltene Lösung wird auf 25°C abgekühlt und unter Rühren werden 3.200 Teile Melamin zugesetzt. Das Reaktionsgemisch wird bis 90°C aufgeheizt und bei 90 bis 95°C ca. 70 Minuten bis zu einer Viskosität von 380 mPa.s (20°C) umgesetzt.

Die so erhaltene Harzlösung wird auf 25°C abgekühlt und mit 7.940 Teilen eines handelsüblichen wäßrigen Harnstoff-Formaldehyd-Leimharzes, wie in Beispiel 1 beschrieben, abgemischt.

Die Leimharzmischung hat folgende Eigenschaften:

| | |
|---|---|
| Viskosität: | 560 mPa.s (20°C) |
| pH-Wert bei 20°C: | 9,0 |
| Dichte bei 20°C: | 1,275 g/cm$^3$ |
| Trockengehalt: | 63,0 % |
| Gelierzeit bei 50°C: | 30 Minuten (nach Zusatz von 10 % einer 15 %igen NH$_4$Cl-Lösung) |
| Lagerstabilität bei 25°C: | 4 Wochen (Viskositätsanstieg bis 2.500 mPa.s) |
| Kältestabilität bei 0°C: | 2 Wochen |

**Patentansprüche**

1. Kältestabile, wäßrige Leimharzlösung von Kondensationsprodukten des Formaldehyds mit einer Kombination von Phenol-, Harnstoff- und Melamin-Komponenten, erhältlich durch Kondensation der Phenol-, Harnstoff- und Melamin-Komponenten mit Formaldehyd in Gegenwart von mindestens 0,5 Gew.% $\epsilon$-Aminocaprolactam oder $\epsilon$-Aminocapronsäure, bezogen auf das Gesamtgewicht der Leimharzlösung, wobei Harnstoff- und Phenolkomponenten gegebenenfalls als Formaldehydvorkondensate eingesetzt werden, in welchem Fall das Harnstoff-Formaldehyd-Vorkondensat auch dem in Gegenwart des $\epsilon$-Aminocaprolactams oder der $\epsilon$-Aminocapronsäure aus Phenol-Formaldehyd-Vorkondensat, Melamin und Formaldehyd gebildeten Kondensat zugemischt werden kann.

2. Leimharzlösung nach Anspruch 1, erhältlich durch Kondensation in Gegenwart von 0,5 bis 2 Gew.% $\epsilon$-Aminocaprolactam oder $\epsilon$-Aminocapronsäure.

3. Leimharzlösung nach Anspruch 1, erhältlich durch Kondensation in Gegenwart von 0,8 bis 1,3 Gew.% $\epsilon$-Aminocaprolactam oder $\epsilon$-Aminocapronsäure.

4. Leimharzlösung nach einem der Ansprüche 1 bis 3, dadurch gekennzeichnet, daß sie Modifizierungsmittel für Phenoplaste enthält.

5. Verfahren zur Herstellung der kältestabilen, wäßrigen Leimharzlösung nach einem der Ansprüche 1 bis 4, dadurch gekennzeichnet, daß man die Phenol-, Harnstoff- und Melamin-Komponenten mit Formaldehyd in Gegenwart von $\epsilon$-Aminocaprolactam oder $\epsilon$-Aminocapronsäure in den in den Ansprüchen 1 bis 3 genannten Gewichtsprozenten kondensiert, wobei Harnstoff- und Phenolkomponenten gegebenenfalls als Formaldehydvorkondensate eingesetzt werden, in welchem Fall das Harnstoff-Formaldehyd-Vorkondesat auch dem in Gegenwart des $\epsilon$-Aminocaprolactams oder der $\epsilon$-Aminocapronsäure aus Phenol-Formaldehyd-Vorkondensat, Melamin und Formaldehyd gebildeten Kondensat zugemischt werden kann.

6. Verwendung von $\epsilon$-Aminocaprolactam oder $\epsilon$-Aminocapronsäure als Kältestabilisator für wäßrige Leimharzlösungen von Kondensationsprodukten des Formaldehyds mit einer Kombination von Phenol-, Harnstoff- und Melamin-Komponenten, in einer Menge von mindestens 0,5 Gew.%, bezogen auf das Gesamtgewicht der Leimharzlösung.

7. Verwendung nach Anspruch 6 in einer Menge von 0,5 bis 2 Gew.%, insbesondere 0,8 bis 1,3 Gew.%.

**Claims**

1. A low temperature stable aqueous size resin solution of a condensation product of formaldehyde with a combination of phenol, urea and melamine components, obtainable by condensing the phenol, urea and melamine components with formaldehyde in the presence of at least 0.5% by weight of $\epsilon$-aminocaprolactam or $\epsilon$-aminocaproic acid, based on the total weight of the size resin solution, optionally using urea and phenol components as formaldehyde precondensates, in which case the ureaformaldehyde precondensate may also be mixed into the condensate formed from phenol-formaldehyde precondensate, melamine and formaldehyde in the presence of $\epsilon$-aminocaprolactam or $\epsilon$-aminocaproic acid.

2. A size resin solution as claimed in claim 1, obtainable by condensation in the presence of from 0.5 to 2% by weight of $\epsilon$-aminocaprolactam or $\epsilon$-aminocaproic acid.

3. A size resin solution as claimed in claim 1, obtainable by condensation in the presence of from 0.8 to 1.3% by weight of $\epsilon$-aminocaprolactam or $\epsilon$-aminocaproic acid.

4. A size resin solution as claimed in any one of claims 1 to 3, containing a modifier for phenolic resins.

5. A process for preparing a low temperature stable aqueous size resin solution as claimed in any one of claims 1 to 4, which comprises condensing the phenol, urea and melamine components with formaldehyde in the presence of $\epsilon$-aminocaprolactam or $\epsilon$-aminocaproic acid in the weight percentages mentioned in claims 1 to 3, optionally using urea and phenol components as formaldehyde precondensates, in which case the urea-formaldehyde precondensate may also be mixed into the condensate formed from phenol-formaldehyde precondensate, melamine and formaldehyde in the presence of $\epsilon$-amino-caprolactam or $\epsilon$-aminocaproic acid.

6. The use of $\epsilon$-aminocaprolactam or $\epsilon$-aminocaproic acid as low temperature stabilizer for aqueous size resin solutions of condensation products of formaldehyde with a combination of phenol, urea and melamine components, in an amount of at least 0.5% by weight, based on the total weight of the size resin solution.

7. A use as claimed in claim 6 in an amount of from 0.5 to 2% by weight, in particular of from 0.8 to 1.3% by weight.

**Revendications**

1. Solution aqueuse, stable au froid, de colle résineuse de produits de condensation du formaldéhyde avec une combinaison de composants phénol, urée et mélamine, pouvant être obtenue par condensation des composants phénol, urée et mélamine avec du formaldéhyde en présence d'au moins 0,5% en poids d'$\epsilon$-aminocaprolactame ou d'acide $\epsilon$-aminocaproïque par rapport au poids total de la solution de colle résineuse, les composants urée et phénol étant éventuellement utilisés sous forme de produits de précondensation de formaldéhyde, auquel cas le produit de précondensation urée-formaldéhyde peut être également mélangé au produit de condensation formé, en présence de l'$\epsilon$-aminocaprolactame ou de l'acide $\epsilon$-aminocaproïque, à partir de produit de précondensation phénolformaldéhyde, de mélamine et de formaldéhyde.

2. Solution de colle résineuse selon la revendication 1, pouvant être obtenue par condensation en présence de 0,5 à 2% en poids d'$\epsilon$-aminocaprolactame ou d'acide $\epsilon$-aminocaproïque.

3. Solution de colle résineuse selon la revendication 1, pouvant être obtenue par condensation en présence de 0,8 à 1,3% en poids d'$\epsilon$-aminocaprolactame ou d'acide $\epsilon$-aminocaproïque.

4. Solution de colle résineuse selon l'une quelconque des revendications 1 à 3, caractérisée en ce qu'elle contient des agents de modification pour phénoplastes.

5. Procédé de préparation de la solution aqueuse, stable au froid, de colle résineuse selon l'une quelconque des revendications 1 à 4, caractérisé en ce qu'on condense les composants phénol, urée et mélamine avec du formaldéhyde en présence d'$\epsilon$-aminocaprolactame ou d'acide $\epsilon$-aminocaproïque dans les pourcentages en poids spécifiés dans les revendications 1 à 4, les composants urée et phénol étant éventuellement utilisés sous forme de produits de précondensation de formaldéhyde, auquel cas le produit de précondensation urée-formaldéhyde peut être également mélangé au produit de condensation formé, en présence de l'$\epsilon$-aminocaprolactame ou de l'acide $\epsilon$-aminocaproïque, à partir de produit de précondensation phénolformaldéhyde, de mélamine et de formaldéhyde.

6. Utilisation d'$\epsilon$-aminocaprolactame ou d'acide $\epsilon$-aminocaproïque comme stabilisant au froid pour des solutions aqueuses de colle résineuse de produits de condensation du formaldéhyde avec une combinaison de composants phénol, urée et mélamine, à raison d'au moins 0,5% en poids par rapport au poids total de la solution de colle résineuse.

7. Utilisation selon la revendication 6 à raison de 0,5 à 2% en poids, en particulier de 0,8 à 1,3% en poids.